## Europäisches Patentamt
## European Patent Office
## Office européen des brevets

(19)

(11) Numéro de publication: **0 025 755 B1**

(12) **FASCICULE DE BREVET EUROPEEN**

(45) Date de publication du fascicule du brevet: **11.07.84**

(51) Int. Cl.³: **H 05 B 3/26, H 05 B 3/06**

(21) Numéro de dépôt: **80401279.7**

(22) Date de dépôt: **08.09.80**

(54) Vitrage chauffant à film résistant mince.

(30) Priorité: **08.09.79 DE 2936398**

(43) Date de publication de la demande:
**25.03.81 Bulletin 81/12**

(45) Mention de la délivrance du brevet:
**11.07.84 Bulletin 84/28**

(84) Etats contractants désignés:
**BE DE FR GB IT SE**

(56) Documents cités:
**DE - A - 2 231 086**
**DE - C - 725 639**
**FR - A - 841 868**
**FR - A - 1 345 227**
**FR - A - 2 105 845**
**FR - A - 2 279 687**
**FR - A - 2 282 205**
**US - A - 2 982 934**

(73) Titulaire: **SAINT-GOBAIN VITRAGE**
**Les Miroirs 18, avenue d'Alsace**
**F-92400 Courbevoie (FR)**
(84) **BE FR GB IT SE**
(73) Titulaire: **VEGLA Vereinigte Glaswerke GmbH**
**Viktoria Allee 3-5**
**D-5100 Aachen (DE)**
(84) **DE**

(72) Inventeur: **Sauer, Gerd**
**Karl-Friedrich Strasse 25**
**D-5100 Aachen-Laurensberg (DE)**

(74) Mandataire: **Eudes, Marcel et al,**
**Saint-Gobain Recherche 39 Quai Lucien Lefranc**
**F-93304 Aubervilliers Cedex (FR)**

Courier Press, Leamington Spa, England.

## Description

L'invention a pour objet un vitrage à chauffage électrique porteur d'un mince film électriquement conducteur d'une résistance de 1 à 10 ohms par carré déposé sur un support transparent et raccordé électriquement à des collecteurs en forme de bandes servant à l'alimentation en courant, et comprenant entre les collecteurs et le film mince une couche de transition.

Les vitrages à chauffage électrique dont la résistance chauffante est constituée d'un mince film transparent existent sous diverses formes. Ils sont par exemple utilisés dans les cas où il faut éviter qu'un dépôt d'humidité ne perturbe la visibilité. Le film résistant lui-même peut être constitué de matériaux très différents. En règle générale, on utilise des couches métalliques, en particulier des couches d'or ou d'argent mais aussi des couches à base de composés métalliques, en particulier d'oxyde d'étain ou d'oxyde d'indium, et le cas échéant des couches mixtes correspondantes. Ces couches peuvent être obtenues par évaporation ou pulvérisation thermique du métal correspondant, sous atmosphère raréfiée, par projection de solutions de composés métalliques décomposés ensuite par pyrolyse, ou encore par diffusion ionique, etc...

D'autre part, ils peuvent être déposés soit immédiatement à la surface de la feuille de verre silicate, soit encore sur un support transparent, en particulier une feuille de matière transparente incorporée dans un vitrage feuilleté comprenant une ou plusieurs feuilles de verre silicate.

Toutes ces variantes appartiennent à l'état de la technique, comme décrit dans la demande de brevet FR—A—2 279 687.

Dans ces films résistants extrêmement minces règne souvent une densité de courant très élevée, de sorte que les couches sont souvent sollicitées presque à la limite de leurs capacités. La densité de courant est particulièrement élevée là où existent des défauts d'homogénéité à l'intérieur de la couche résistante et de tels défauts peuvent rapidement aboutir à une surcharge locale du film résistant.

La transition brutale de la couche qui forme le collecteur, de résistivité superficielle relativement basse au film résistant, de résistivité superficielle relativement élevée constitue une telle inhomogénéité. Il en résulte que les zones de transition des collecteurs aux films minces de ce type de vitrages chauffants sont en règle générale des zones critiques dans lesquelles se produisent facilement des concentrations locales de courant. A ces emplacements, le film résistant brûle et perd sa conductivité; d'autres zones doivent donc supporter le passage d'un courant plus élevé ce qui les surcharge à leur tour et provoque alors leur destruction. Dans les cas les plus défavorables, on obtient finalement le long du collecteur une ligne de destruction continue qui interrompt le passage du courant.

Le brevet français FR 841 868 décrit une couche de transition entre le collecteur et le film mince. Cette couche de transition est constituée d'une surépaisseur en un métal ou matière conductrice. Aucune indication n'apparait cependant quant à la résistivité d'une telle couche de transition.

L'invention a pour objet d'améliorer le raccordement électrique du film résistant mince aux collecteurs par rapport aux vitrages à chauffage électrique de l'art antérieur et par conséquent de réduire les risques de surcharges locales donc le danger de destruction de la couche résistante.

Pour résoudre cette difficulté, l'invention propose un ensemble de mesures convergentes.

Selon une première caractéristique de l'invention la couche de transition a une résistivité spécifique plus grande que celle des collecteurs et du film mince.

Cette solution se fonde sur le fait qu'on ne peut obtenir un contact homogène entre un collecteur et le film résistant, mais que, bien au contraire, les surfaces en quelque sorte ne se touchent que ponctuellement. La surcharge de courant se produit tout particulièrement le long de la bordure interne, de sorte que les points de contact dangereux se trouvent le long de cette ligne. Si l'on interpose une couche de transition selon l'invention, les points de contact en question sont munis dans une certaine mesure d'une résistance en série qui limite les concentrations de courant locales par la chute de tension qu'elle engendre à sa traversée. Ceci améliore la répartition du courant en dépit du manque d'homogénéité des contacts.

Pour mettre en oeuvre cette solution, on constitue avantageusement la couche de transition d'un matériau dont la résistivité spécifique est de 50 à 500 fois supérieure à celles du matériau constituant le film mince et les collecteurs, lesquelles sont sensiblement du même ordre dans les deux cas en dépit de la grande différence de résistivité superficielle.

On obtient par exemple de bons résultats si, en fonction de la conductibilité de la couche de transition, on ajuste son épaisseur de sorte que la chute de tension soit de l'ordre de 0,1 à 1%, et de préférence proche de 0,5% de la tension d'alimentation.

Selon une autre caractéristique de l'invention, on peut constituer les collecteurs eux-mêmes d'un matériau possédant une résistivité spécifique de l'ordre de 2 à 5 fois supérieure à celle du matériau de film mince.

Cette solution agit de la même façon que la solution précédente à la différence près que la résistance en série sur les points de contact entre collecteurs et film résistant est fournie par le matériau du collecteur lui-même.

Selon une autre caractéristique de l'invention, la bordure interne de chaque collecteur, tournée vers le film et vers le collecteur opposé, possède une forme ondulée. Ceci prolonge sensiblement la zone limite à l'intérieur de laquelle la plus grande partie du courant passe des collecteurs au film résistant, sans créer de pointes sur la bordure de chaque collecteur, ce qui conduirait à nouveau à une augmentation de l'intensité du courant accompagnée des inconvénients précités.

Une solution qui permet d'atteindre de bons résultats est de constituer la bordure de chaque collecteur d'une succession de demi-ondes sinusoïdales ayant chacune un pas de 0,5 à 2 cm et une amplitude du même ordre de grandeur de 0,5 à 2 cm. Dans ces conditions, la longueur de la bordure est sensiblement doublée de sorte que la densité de courant moyenne est réduite de moitié.

Selon une autre caractéristique, il est possible d'atteindre les résultats cherchés en diminuant la section des bandes qui constituent les collecteurs au moins dans la région la plus proche du film résistant, sur une largeur de 0,5 à 2 cm, lui donnant un profil qui s'amincit en biseau, l'épaisseur décroissant régulièrement, de celle de la région qui sert à répartir le courant jusqu'à une épaisseur de l'ordre de celle du film résistant. Dans ce cas également, on évite une transition brutale entre le collecteur et le film résistant mince, et on obtient au contraire un couplage progressif puisque la résistance du collecteur augmente progressivement en direction du film mince pour se rapprocher de la résistance de celui-ci. Il y a donc une transition progressive depuis les collecteurs à faible résistivité superficielle vers la couche résistante à forte résistivité superficielle. La solution la plus complète consiste à combiner ces différentes mesures.

Différents exemples avantageux d'exécution sont décrits de plus près ci-dessous, en référence aux dessins. Ces dessins montrent:

Fig. 1: une vue partielle d'un vitrage chauffant dont les collecteurs ont une bordure sinusoïdale,

Fig. 2: une coupe suivant la ligne II—II du vitrage représenté sur la figure 1,

Fig. 3: une coupe d'un vitrage chauffant muni d'un mince film résistant et de collecteurs placés entre le vitrage et le film résistant et dont l'épaisseur se réduit dans la région de la bordure,

Fig. 4: une coupe d'un vitrage chauffant muni d'un mince film résistant sur lequel les collecteurs sont déposés avec interposition d'une couche de transition,

Fig. 5: une coupe d'un vitrage chauffant feuilleté dont le mince film résistant est déposé sur un support de matière plastique intercalé entre deux feuilles de verre,

Fig. 6: une coupe d'un vitrage chauffant feuilleté correspondant à une autre variante de l'invention,

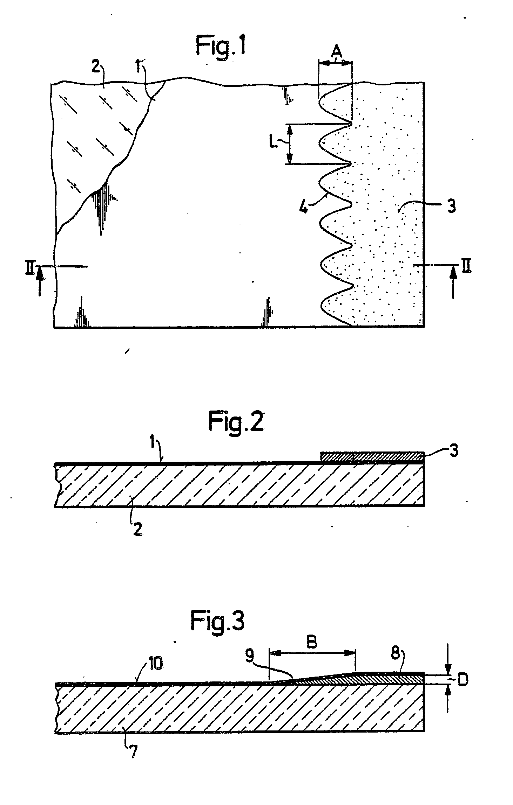

La figure 1 est une vue partielle d'un vitrage possédant un film transparent formant résistance électrique 1, déposé sur une feuille de verre silicate 2 et, sur le bord de celle-ci des bandes collectrices 3 servant de collecteurs d'amenée du courant, dont une seule est représentée. Le film résistant est constitué d'une très mince couche d'oxydes d'étain et d'indium d'une résistance superficielle de 6 ohms par carré déposée par pyrolyse, les collecteurs 3 d'un émail à l'argent déposé par impression, d'une façon bien connue par exemple à l'écran de soie; ils ont une épaisseur de l'ordre de 20 $\mu$m et une résistance superficielle de 0,01 ohms par carré.

Le film résistant 1 s'étend sous l'électrode 3 jusqu'au bord de la feuille de verre mais, en raison de la forte différence de résistivité superficielle des deux couches en contact, le passage du courant du collecteur 3 au film résistant 1 se produit principalement le long de la bordure 4.

Afin d'y réduire la densité de courant, cette bordure 4 a la forme d'une succession de demi-ondes sinusoïdales ou de dents en festons arrondis dont chacun se développe en direction du film 1. L'amplitude A des demi-ondes est de l'ordre de 1 cm, leur pas L également de l'ordre de 1 cm.

Si, au lieu de la forme sinusoïdale représentée, on donne à la bordure 4, dans le but d'augmenter sa longueur, une forme différence, il faut veiller à ce qu'il n'y ait pas de pointe dirigée vers le film résistant 1, mais toujours choisir des formes arrondies assurant la meilleure homogénéité possible de la répartition de la densité du courant le long de cette bordure.

Les collecteurs 3 peuvent posséder sur la totalité de leur surface, y compris les festons sinusoïdaux, une épaisseur constante ainsi que le montre la figure 2. Toutefois, le passage du courant des collecteurs 3 au film résistant 1 sera encore plus régulier s'ils possèdent dans toute la région marginale, par exemple sur une largeur correspondant à l'amplitude A des festons sinusoïdaux, une épaisseur continuement décroissante.

Dans la variante représentée sur la figure 3, la feuille de verre silicate 7 reçoit en premier lieu les collecteurs 8 et la couche résistante 10 est ensuite déposée sur l'ensemble de la surface du vitrage 7 et des collecteurs 8.

Ces derniers, à nouveau constitués d'une couche conductrice à l'argent possèdent une forme en biseau c'est-à-dire un bord rectiligne 9 d'épaisseur régulièrement décroissante. Le film résistant 10 est une couche d'or ou d'argent déposée par vaporisation sous vide élevé et possédant une transmission lumineuse de l'ordre de 80%. Il peut aussi avoir une structure à plusieurs couches obtenues par des dépôts de composés métalliques effectués aussi bien sous la couche métallique que par dessus, dans le but d'améliorer son adhérence, son couplage optique au substrat, ou de la protéger, etc... A cette fin, l'emploi de couches de sulfure de zinc, d'oxyde de titane, de fluorure de magnésium ou autres est d'usage courant.

Les collecteurs 8 possèdent sur le bord de la feuille de verre une région d'une épaisseur constante D de l'ordre de 20 $\mu$m. Cette région du collecteur sert essentiellement à amener le courant sur toute la longueur de celui-ci avec le moins possible de pertes. Il s'y raccorde, en direction du film résistant mince 10, une région de largeur B dont la section s'amincit progressivement, passant de l'épaisseur D à zéro ou à une épaisseur correspondant à celle du film résistant 10. Le collecteur se trouve en contact avec la couche résistante 10 sur toute la distance B.

En raison de la forme en coin de sa section transversale, sa résistivité superficielle augmente en direction de l'extrémité des saillants, c'est-à-dire en direction du film résistant 10 et se rapproche de celle de ce dernier.

Il en résulte que la résistance du contact augmente dans cette région critique, ce qui provoque un couplage progressif du courant sur une plus grande partie du collecteur et évite une transition trop rapide.

La largeur B du domaine en biseau du collecteur 8 peut mesurer de 0,5 à 2 cm environ et avantageusement être de l'ordre de 1 cm.

Les collecteurs 8 peuvent bien entendu être aussi déposés sur le film résistant 10.

On peut encore améliorer le raccordement des collecteurs à la couche résistante, aussi bien sur les collecteurs ayant une simple forme de bande que, bien entendu, sur ceux qui ont les formes les plus diverses dans le cadre de la description des figures 1 à 3, par le choix de matériaux qui possèdent une résistivité accrue. Alors que la résistivité spécifique du matériau qui constitue les collecteurs est normalement du même ordre de grandeur que celle du matériau qui constitue le film résistant mince, on peut, selon un mode d'exécution de l'invention, utiliser pour les constituer un matériau possédant une résistivité au moins double et de préférence allant jusqu'au quintuple de celle du matériau de ce film résistant.

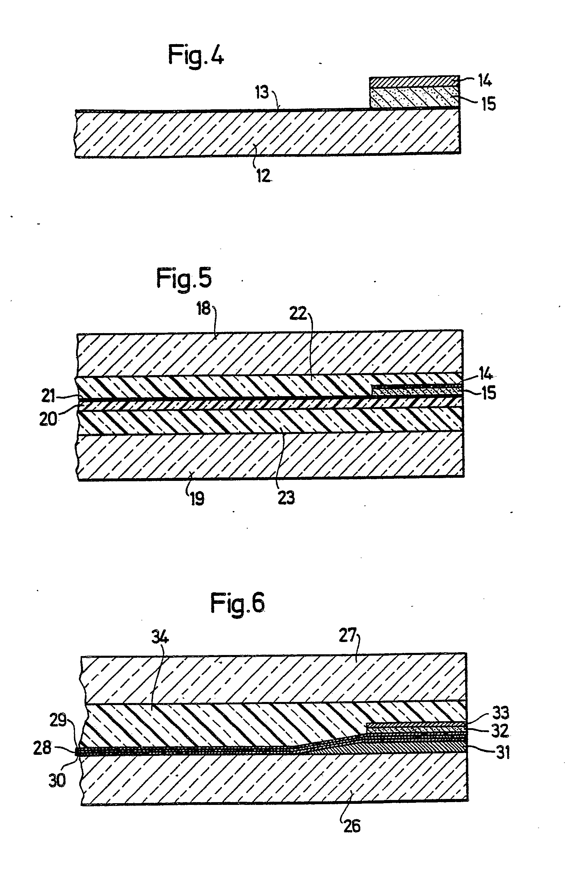

Dans la variante représentée sur la figure 4, la feuille de verre silicate 12 supporte un film résistant 13 auquel le courant est amené par des collecteurs 14 constitués d'un matériau de faible résistivité spécifique tel qu'une feuille de cuivre d'environ 0,1 mm d'épaisseur. Entre ces collecteurs et le film résistant est cependant interposée une couche de transition 15 d'une résistivité plus élevée, provoquant une chute de tension de l'ordre de 0,5% de la tension d'alimentation. Si cette dernière est de 24 V, et que la couche résistante 13 ait une résistivité superficielle de 2 ohms par carré, la couche de transition peut être constituée d'un matériau à base de graphite, agent, cuivre... déposé par impression sous forme de pâte à l'épaisseur de 0,5 mm et possédant après durcissement une résistivité spécifique de 10 ohms par carré.

La figure 5 montre un vitrage feuilleté à chauffage électrique constitué de deux feuilles externes 18 et 19 de verre silicate et d'une feuille médiane 20 de polyester revêtue sur l'une de ses faces d'un film résistant 21 et assemblée sur les feuilles de verre 18 et 19 à l'aide de deux feuilles de collage 22 et 23 en polyvinylbutyral.

La feuille de polyester 20 qui sert de support à la couche résistante 21 possède une épaisseur de l'ordre de 50 $\mu$m.

Sa surface est tout d'abord revêtue d'une couche de sulfure de zinc obtenue par vaporisation thermique qui sert de couche d'ancrage et améliore le couplage optique pour abaisser le coefficient de réflexion et par conséquent augmenter la transparence. Sur cette couche de sulfure de zinc est vaporisée la couche conductrice proprement dite, constituée d'argent, ceci sous une épaisseur telle que la transmission lumineuse soit de l'ordre de 80%. La couche d'argent est à nouveau revêtue d'une couche de sulfure de zinc. C'est l'ensemble de ces trois couches élémentaires qui forme le film résistant 21.

Les collecteurs 14 sont déposés sur ce dernier avec interposition d'une couche de transition 15 à base de graphite analogue à celle décrite en laison avec la figure 4.

La figure 6 montre une autre variante selon laquelle c'est la feuille de verre 26 qui sert de support au film résistant. La couche conductrice proprement dite 28 est à nouveau constituée d'argent vaporisé thermiquement sous vide. Les couches de couplage optique 29 et 30 qui sont placées au-dessus et au-dessous de la couche d'argent sont des couches d'oxyde de titane également vaporisées par voie thermique.

Auparavant, une bande collective 31 formant un collecteur additionnel, constituée d'un alliage de cuivre et de titane a été déposée par pulvérisation à la flamme. En vue de cette opération, on a placé un masque à distance de 10 mm de la feuille de verre, de sorte que l'on a évité toute transition brutale entre cette bande et le film résistant; au contraire l'épaisseur de la bande 31 décroît progressivement, sur une largeur d'environ 1 cm, jusqu'à une valeur nulle, ce qui fournit le raccordement souhaité du collecteur peu résistant au film très résistant. Au-dessus de la bande 31, le film résistant 28 reçoit une couche de transition 32 formée d'une composition à base de graphite, puis une bande de cuivre 33 d'une épaisseur de 0,1 mm.

Les électrodes renforcées de cette façon conviennent particulièrement lorsqu'il est nécessaire d'employer sur le vitrage chauffant des intensités de courant relativement élevées.

Les couches successives sont recouvertes d'une feuille de verre 27 qui est assemblée à l'aide d'une couche collante en polyvinylbutyral 34 sur la feuille 26 après dépôt des différentes couches et pose des collecteurs.

## Revendications

1. Vitrage à chauffage électrique porteur d'un mince film électriquement conducteur d'une résistance de 1 à 10 ohms par carré, déposé sur un support transparent et raccordé électriquement à des collecteurs en forme de bandes, et comprenant entre les collecteurs (14) et le film mince (13, 21) une couche de transition, caractérisé en ce que ladite couche de transition (15) a une résistivité spécifique plus grande que celle des collecteurs (14) et du film résistant (13, 21).

2. Vitrage chauffant selon la revendication 1, caractérisé en ce que la couche de transition est constituée d'un matériau dont la résistivité spécifique est de 50 à 500 fois supérieure à celles du matériau constituant le film mince et les collecteurs.

3. Vitrage chauffant selon une des revendications 1 ou 2, caractérisé en ce que l'épaisseur de la couche de transition est telle que la chute de tension y soit de l'ordre de 0,1 à 1% de la tension d'alimentation et de préférence proche de 0,5% de la tension d'alimentation.

4. Vitrage chauffant selon une des revendications 2 ou 3, caractérisé en ce que la couche de transition est constituée d'un matériau en pâte apte à être déposé par impression, où des particules électro-conductrices telles que graphite, argent, cuivre, sont dispersées dans un liant organique durcissable.

5. Vitrage à chauffage électrique porteur d'un mince film électriquement conducteur (1) d'une résistance de 1 à 10 ohms par carré déposé sur un support transparent et raccordé électriquement à des collecteurs (3) en forme de bandes, caractérisé en ce que les collecteurs (3) sont constitués d'un matériau ayant une résistivité spécifique plus grande que celle du film résistant (1) et ont une bordure interne (4) possèdant une forme ondulée.

6. Vitrage chauffant selon la revendication 5, caractérisé en ce que la bordure interne de chaque collecteur est formée d'une succession de demi-ondes sinusoïdales.

7. Vitrage chauffant selon la revendication 6, caractérisé en ce que les demi-ondes ont une longueur et une amplitude comprises l'une et l'autre entre 0,5 et 2 cm, et de prédérence de l'ordre de 1 cm.

8. Vitrage chauffant selon une des revendications 5 à 7, caractérisé en ce que les collecteurs (3) sont constitués d'un matériau possédant une résistivité spécifique de l'ordre de 2 à 5 fois supérieure à celle du matériau du film mince.

9. Vitrage chauffant selon une des revendications de 1 à 8, caractérisé en ce que les collecteurs (3, 8) ou les collecteurs additionnels (31) possédent, au moins dans leur région interne, une épaisseur décroissante.

10. Vitrage chauffant selon la revendication 9, caractérisé en ce que les collecteurs (8) ou les collecteurs additionnels (31) possédent une région externe d'épaisseur constante D et une région interne à section en biseau passant de l'épaisseur D à une épaisseur correspondant à celle du film résistant (10) sur une largeur B de 0,5 à 2 cm, et de préférence de l'ordre de 1 cm.

11. Vitrage chauffant selon la revendication 6, caractérisé en ce que les collecteurs possédent du côté interne une bordure non rectiligne, exempte de pointes dirigées vers le collecteur opposé.

12. Vitrage chauffant selon l'une des revendications 1 à 11, caractérisé en ce que les collecteurs sont constitués d'un matériau sous forme de pâte apte à être déposée par impression.

13. Vitrage chauffant selon l'une des revendications 1 à 12, caractérisé en ce que les collecteurs sont déposés à la flamme.

**Patentansprüche**

1. Elektrisch heizbare Glasscheibe mit einem auf einer transparenten Unterlage angeordneten elektrisch leitenden dünnen Film mit einem Flächenwiderstand von 1 bis 10 ohm pro Quadrateinheit, der mit streifenförmigen Sammelleitern in elektrisch leitender Verbindung steht, wobei zwischen den Sammelleitern (14) und den dünnen Film (13, 21) eine Übergangsschicht angeordnet ist, dadurch gekennzeichnet, daß die Übergangsschicht (15) einen größeren spezifischen elektrischen Widerstand aufweist als die Sammelleiter (14) und der Widerstandsfilm (13, 21).

2. Heizbare Glasscheibe nach Anspruch 1, dadurch gekennzeichnet, daß die Übergangsschicht aus einem Material besteht, dessen spezifischer elektrischer Widerstand 50 bis 500 mal größer ist als der spezifische elektrische Widerstand der Materialien, aus denen der dünne Film und die Sammelleiter bestehen.

3. Heizbare Glasscheibe nach einem der Ansprüche 1 oder 2, dadurch gekennzeichnet, daß die Dicke der Übergangsschicht so gewählt ist, daß der Spannungsabfall dort in der Größenordnung von 0,1 bis 1% der Betriebsspannung, und vorzugsweise bei etwa 0,5% der Betriebsspannung liegt.

4. Heizbare Glasscheibe nach einem der Ansprüche 2 oder 3, dadurch gekennzeichnet, daß die Übergangsschicht aus einem in Pastenform nach einem Druckverfahren auftragbaren Material besteht, in dem elektrisch leitende Partikel wie Graphit, Silber oder Kupfer in einem organischen aushärtenden Bindemittel enthalten sind.

5. Elektrisch heizbare Glasscheibe mit einem auf einer transparenten Unterlage angeordneten elektrisch leitenden dünnen Film (1) mit einem Flächenwiderstand von 1 bis 10 Ohm pro Quadrateinheit, der mit streifenförmigen Sammelleitern (3) in elektrisch leitender Verbindung steht, dadurch gekennzeichnet, daß die Sammelleiter (3) aus einem Material besteht, dessen spezifischer elektrischer Widerstand größer ist als der spezifische elektrische Widerstand des Widerstandsfilms (1), und daß sie eine wellenförmige innere Begrenzungslinie (4) aufweisen.

6. Heizbare Glasscheibe nach Anspruch 5, dadurch gekennzeichnet, daß die innere Begrenzungslinie jedes Sammelleiters von aufeinanderfolgenden sinusförmigen Halbwellen gebildet wird.

7. Heizbare Glasscheibe nach Anspruch 6, dadurch gekennzeichnet, daß die Halbwellen eine Länge und eine Amplitude von jeweils 0,5 bis 2,0 cm, und vorzugsweise von größenordnungsmäßig 1 cm aufweisen.

8. Heizbare Glasscheibe nach einem der Ansprüche 5 bis 7, dadurch gekennzeichnet, daß die Sammelleiter (3) aus einem Material mit einem spezifischen elektrischen Widerstand bestehen, der etwa 2 bis 5 mal größer ist als der spezifische elektrische Widerstand des Materials, aus dem dur dünne Film besteht.

9. Heizbare Glasscheibe nach einem der Ansprüche 1 bis 8, dadurch gekennzeichnet, daß die Sammelleiter (3, 8) oder die zusätzlichen Sammelleiter (31) wenigstens in ihrem nach innen gerichteten Bereich eine abnehmende Dicke aufweisen.

10. Heizbare Glasscheibe nach Anspruch 9, dadurch gekennzeichnet, daß die Sammelleiter (8) oder die zusätzlichen Sammelleiter (31) einen äußeren Bereich von konstanter Dicke D, und einen inneren Bereich mit abgeschrägtem Querschnitt aufweisen, dessen Dicke auf einer Breite B von 0,5 bis 2 cm, und vorzugsweise von etwa 1 cm, von der Dicke D auf eine der Dicke des Widerstandstreifens (10) entsprechende Dicke abnimmt.

11. Heizbare Glasscheibe nach Anspruch 6, dadurch gekennzeichnet, daß die Sammelleiter auf ihrer Innenseite eine nicht geradlinige Kante ohne auf den jeweils entgegengesetzten Sammelleiter hin gerichtete spitze Vorsprünge aufweisen.

12. Heizbare Glasscheibe nach einem der Ansprüche 1 bis 11, dadurch gekennzeichnet, daß die Sammelleiter aus einem Material bestehen, das in Pastenform nach einem Druckverfahren auftragbar ist.

13. Heizbare Glasscheibe nach einem der Ansprüche 1 bis 11, dadurch gekennzeichnet, daß die Sammelleiter nach dem Flammspritzverfahren aufgebracht sind.

## Claims

1. Electrically heatable pane carrying a thin electrically conducting film having a resistance from 1 to 10 ohms per square, deposited on a transparent support and connected electrically to collectors in the form of strips, and comprising an intermediate layer between the collectors (14) and the thin film (13, 21), characterised in that said intermediate layer (15) has a specific resistivity which is greater than that of the collectors (14) and the resistant film (13, 21).

2. Heatable pane according to claim 1, characterised in that the intermediate layer is formed of a material of which the specific resistivity is from 50 to 500 times greater than those of the materials forming the thin film and the collectors.

3. Heatable pane according to one of claims 1 and 2, characterised in that the thickness of the intermediate layer is such that the voltage drop thereacross is of the order of 0.1 to 1% of the feed voltage and preferably close to 0.5% of the feed voltage.

4. Heatable pane according to one of claims 2 and 3, characterised in that the intermediate layer is formed of a paste material capable of being deposited by printing, in which electrically conductive particles such as graphite, silver or copper are dispersed in a hardening organic binder.

5. Electrically heatable pane carrying a thin electrically conducting film (1) having a resistance from 1 to 10 ohms per square deposited on a transparent support and connected electrically to collectors (3) in the form of strips, characterised in that the collectors (3) are formed of a material having a specific resistivity which is greater than that of the resistant film (1) and have an internal edge (4) having an undulating shape.

6. Heatable pane according to claim 5, characterised in that the internal edge of each collector is shaped as a succession of sinusoidal half-waves.

7. Heatable pane according to claim 6, characterised in that the half-waves have a length and amplitude which are both from 0.5 to 2 cm and preferably of the order of 1 cm.

8. Heatable pane according to one of claims 5 to 7, characterised in that the collectors (3) are formed of a material having a specific resistivity of the order of 2 to 5 times greater than that of the thin film.

9. Heatable pane according to one of claims 1 to 8, characterised in that the collectors (3, 8) or additional collectors (31) have, at least in their internal part, a decreasing thickness.

10. Heatable pane according to claim 9, characterised in that the collectors (8) or the additional collectors (31) have an external part of constant thickness D and an internal part having a bevelled cross-section going from the thickness D to a thickness corresponding to that of the resistant film (10) over a width B from 0.5 to 2 cm and preferably of the order of 1 cm.

11. Heatable pane according to claim 6, characterised in that the collectors have on their internal side an edge which is non-rectilinear and free from points directed towards the opposite collector.

12. Heatable pane according to one of claims 1 to 11, characterised in that the collectors are formed of a material in the form of a paste capable of being deposited by printing.

13. Heatable pane according to one of claims 1 to 12, characterised in that the collectors are deposited from a flame.

## Fig.1

## Fig.2

## Fig.3

## Fig. 4

13 — 14 — 15 — 12

## Fig. 5

18 — 22 — 14 — 15 — 21 — 20 — 19 — 23

## Fig. 6

34 — 27 — 29 — 33 — 32 — 28 — 31 — 30 — 26